# EUROPÄISCHE PATENTSCHRIFT

(11) **EP 2 895 849 B1**
(45) Veröffentlichungstag und Bekanntmachung des Hinweises auf die Patenterteilung: **21.02.2018**
(21) Anmeldenummer: 13759238.2
(22) Anmeldetag: 09.09.2013
(51) Int. Cl.: G01N 27/28, H05K 9/00

(54) **POTENTIOMETRISCHES SENSORELEMENT UND VERFAHREN ZU DESSEN HERSTELLUNG**
POTENTIOMETRIC SENSOR ELEMENT AND METHOD FOR PRODUCING THE SAME
ÉLÉMENT DE CAPTEUR POTENTIOMÉTRIQUE ET PROCÉDÉ POUR LE FABRIQUER

(30) Priorität: 14.09.2012 DE 102012108636
(43) Veröffentlichungstag der Anmeldung: 22.07.2015
(73) Patentinhaber: Hamilton Bonaduz AG, 7402 Bonaduz (CH)
(72) Erfinder: ARQUINT, Philipp, CH-7402 Bonaduz (CH); SOVRANO, Fabio, CH-7402 Bonaduz (CH); FURGER, Karl, CH-7402 Bonaduz (CH)
(74) Vertreter: Caspary, Karsten
(86) Internationale Anmeldenummer: PCT/EP2013/068643
(87) Internationale Veröffentlichungsnummer: WO 2014/040959

(56) Entgegenhaltungen:
- DE-A1-102007 008 074
- DE-A1-102008 043 169
- DE-A1-102008 051 171
- DE-U1-202007 004 799
- DE-U1-202007 011 915
- DE-U1-202009 001 394

## Beschreibung

Die Erfindung betrifft ein potentiometrisches Sensorelement und ein Verfahren zu dessen Herstellung.
Bei der Analyse von Lösungen mittels Potentiometrie wird ein Messelement in eine Analysenlösung getaucht und es wird die Potentialänderung in Abhängigkeit von einer zugegebenen Reagenzlösung verfolgt. Auf diese Weise lassen sich mit der Potentiometrie in erster Linie Säure-, Base- und Redox-Titrationen durchführen. In der Regel werden für pH-Messungen heutzutage als Messelemente Glaselektroden verwendet, die auf dem Markt leicht verfügbar sind.
Da bei potentiometrischen Messungen oftmals Feuchtigkeit, Staub, Schmutzpartikel oder aggressive Substanzen im Bereich der Sensorelektronik vorliegen, wurde in EP 1 206 012 A2 eine kontaktlose Signalübertragung zwischen einem Sensorelement und einer korrespondierenden Basiseinheit vorgeschlagen, so dass an der Übergangsstelle zwischen Sensorelement und Basiseinheit keine elektrischen Kontaktelemente mehr vorliegen, die korrodieren könnten oder auf andere Weise in ihrer Funktion durch Umgebungseinflüsse behindert werden könnten. Gemäß EP 1 206 012 A2 ist das Messelement fest mit einem Schutzgehäuse verbunden, in dem die Sensorelektronikeinheit aufgenommen und gegen äußere Einflüsse abgedichtet ist. Die kontaktlose Schnittstelle, die mit der Sensorelektronikeinheit verbunden ist, dient zum Energie- und Signalaustausch mit einer entsprechenden kontaktlosen Schnittstelle an einer Basiselektronikeinheit. Die kontaktlose Signalübertragung erfolgt beispielsweise auf induktivem Wege.
Es hat sich herausgestellt, dass selbst bei derartigen Sensorelementen die Sensorelektronikeinheit durch das Schutzgehäuse oft nicht gut genug gegenüber äußeren Einflüssen wie elektromagnetischer Strahlung geschützt ist. Auch die Wärmeableitung von der Sensorelektronikeinheit nach außen und Kriechströme zwischen den Elektronikbauteilen stellen offene Probleme dar.

Weitere artverwandte potentiometrische Sensorelemente sind in DE 20 2007 004799 U1 und DE 20 2007 011915 U1 offenbart, bei denen Sensorelektronikeinheiten in einer Hülle aufgenommen werden, wobei sie von einer Vergussmasse umgeben sind. Der vorliegenden Erfindung liegt daher die Aufgabe zugrunde, ein potentiometrisches Sensorelement zu schaffen, das robust ist, unter verschiedensten Randbedingungen zuverlässige Messergebnisse liefert und auf eine fest definierte, wiederholbare Weise herstellbar ist, sowie ein entsprechendes Verfahren zur Herstellung des potentiometrischen Sensorelements anzugeben.

Diese Aufgabe wird durch die Merkmale des Anspruchs 1 bzw. des Anspruchs 10 gelöst.

Erfindungsgemäß weist das potentiometrische Sensorelement ein Messelement und ein mit dem Messelement fest verbundenes Schutzgehäuse auf, in dem eine Sensorelektronikeinheit aufgenommen und gegen äußere Einflüsse abgedichtet ist. Dabei ist die Sensorelektronikeinheit mit einer kontaktlosen Schnittstelle verbunden, die zum Energie- und Signalaustausch mit einer entsprechenden kontaktlosen Schnittstelle an einer Basiselektronikeinheit dient. Das Schutzgehäuse weist eine äußere Hülle und eine in der äußeren Hülle aufgenommene innere Hülle auf, wobei die Sensorelektronikeinheit in der inneren Hülle aufgenommen ist. Die Sensorelektronikeinheit ist in der inneren Hülle von einer ersten Vergussmasse umgeben, so dass die innere Hülle mit der darin aufgenommenen Sensorelektronikeinheit und der ersten Vergussmasse ein gefülltes Innenelement des Schutzgehäuses bildet. Das gefüllte Innenelement ist wiederum mittels einer zweiten Vergussmasse, die zur ersten Vergussmasse verschieden ist, fest mit der äußeren Hülle verbunden.

Ein derartiges Sensorelement ist robust und kann bei verschiedenartigsten äußeren Bedingungen (Temperaturschwankungen, korrodierende Umgebung, elektromagnetische Strahlungsfelder) auch für Langzeitmessungen eingesetzt werden. Die Sensorelektronikeinheit ist optimal geschützt und gleichzeitig ist für eine ausreichende Wärmeableitung der Elektronikbauteile nach außen gesorgt.

Vorzugsweise ist die Sensorelektronikeinheit als Platine mit darauf angebrachten Elektronikbauteilen ausgebildet. Dadurch wird die Kompaktheit des Sensorelements gesteigert.

Zur verbesserten Abschirmung gegenüber elektromagnetischer Strahlung ist die innere Hülle des Schutzgehäuses vorzugsweise aus einem Metall gefertigt, mehr bevorzugt aus Messing.

Von besonderem Vorteil für das Herstellungsverfahren ist es, wenn die innere Hülle zweiteilig ausgebildet ist, wobei die innere Hülle ein Montageteil und ein auf das Montageteil aufsetzbares hohlkörperförmiges Aufsetzteil aufweist. Dies erleichtert das Anlöten von Sensorkontakten des Messelements an entsprechenden Kontakten der Sensorelektronikeinheit mit Hilfe des Montageteils, bevor das hohlkörperförmige Aufsetzteil aufgesetzt wird.

Hierbei ist es besonders bevorzugt, wenn die Sensorelektronikeinheit mit einem ersten Verbindungselement verbunden ist, das mit einem an dem Montageteil der inneren Hülle ausgebildeten zweiten Verbindungselement in Eingriff steht. Durch Einsatz des ersten und zweiten Verbindungselements wird eine form- oder reibschlüssige Verbindung zwischen der Sensorelektronikeinheit und dem Montageteil geschaffen, welche eine definierte Lage der Sensorelektronikeinheit im Schutzgehäuse definiert und zudem eventuelle Lötarbeiten an der Sensorelektronikeinheit im vormontierten Zustand erleichtert.

Beispielsweise kann das erste Verbindungselement ein Vorsprung und das zweite Verbindungselement eine Aufnehmung sein. Auch eine umgekehrte Anordnung ist denkbar. Schließlich sind auch alle anderen lösbaren Verbindungstechniken möglich.

Die kontaktlose Schnittstelle des Sensorelements ist vorzugsweise eine induktive Schnittstelle, die eine Spule aufweist. Bei Einsatz der induktive Schnittstelle ist gewährleistet, dass die Energieversorgung der Sensorelektronikeinheit durch die Basiselektronikeinheit und die Signalübertragung von der Sensorelektronikeinheit an die Basiselektronikeinheit parallel zueinander störungsfrei ablaufen können.

Die Spule ist dabei vorzugsweise außerhalb der inneren Hülle des Schutzgehäuses angeordnet und von der zweiten Vergussmasse umgeben.

Um die gewünschten Eigenschaften der optimalen Lagerung und des optimalen Schutzes der Sensorelektronikeinheit erreichen zu können, ist die erste Vergussmasse vorzugsweise aus einer Gruppe von Vergussmassen ausgewählt, die eine gute Wärmeleitung und elektrische Isolierung liefern, während die zweite Vergussmasse aus einer Gruppe von Vergussmassen ausgewählt ist, die eine thermisch stabile Klebeverbindung liefern. Beide Vergussmassen sind vorzugsweise Zwei-Komponenten-Kleber, die jeweils einen anderen Funktionsschwerpunkt besitzen.

Das erfindungsgemäße Verfahren zum Herstellen eines potentiometrischen Sensorelements mit einem Messelement und einem fest damit verbundenen Schutzgehäuse, in dem eine Sensorelektronikeinheit aufgenommen und gegen äußere Einflüsse abgedichtet ist, umfasst folgende Schritte:
- Bereitstellen des Messelements;
- Anordnen einer inneren Hülle des Schutzgehäuses um die Sensorelektronikeinheit herum und festes Verbinden der inneren Hülle mit dem Messelement;
- Auffüllen der inneren Hülle mit einer ersten Vergussmasse und Aushärten der ersten Vergussmasse, dadurch Ausbilden eines gefüllten Innenelements bestehend aus der inneren Hülle mit der darin aufgenommenen Sensorelektronikeinheit und der ersten Vergussmasse, die die Sensorelektronikeinheit umgibt;
- Einfüllen einer zweiten Vergussmasse, die zur ersten Vergussmasse verschieden ist, in eine einseitig offene äußere Hülle des Schutzgehäuses, Einführen des gefüllten Innenelements in die äußere Hülle und Aushärten der zweiten Vergussmasse, dadurch festes Verbinden des gefüllten Innenelements mit der äußeren Hülle des Schutzgehäuses.

Mit diesem Herstellungsverfahren wird sichergestellt, dass Lufteinschlüsse in den Vergussmassen nahezu ausgeschlossen werden und ein mehrschichtiger Aufbau zum Schutz und zur Einbettung der Sensorelektronikeinheit in der äußeren Hülle des Schutzgehäuses ermöglicht wird. Das Herstellungsverfahren ist außerdem problemlos reproduzierbar und ermöglicht somit auch eine schnelle Serienfertigung.

Vorzugsweise umfasst das Anordnen der inneren Hülle um die Sensorelektronikeinheit herum und das feste Verbinden der inneren Hülle mit dem Messelement folgende Teilschritte:
- festes Verbinden eines Montageteils der inneren Hülle mit dem Messelement;
- mechanisches Ankoppeln der Sensorelektronikeinheit an das Montageteil;
- Anlöten von Sensorkontakten des Messelements an die Sensorelektronikeinheit; und
- Aufsetzen eines hohlkörperförmigen Aufsetzteils der inneren Hülle auf das Montageteil und somit Anordnen des Aufsetzteils um die Sensorelektronikeinheit herum.

Somit nimmt die Sensorelektronikeinheit eine fest definierte Lage innerhalb des Schutzgehäuses ein, was die Reproduzierbarkeit des Verfahrens weiter erhöht, und außerdem wird die Handhabung der Elektronikbauteile, insbesondere beim Anlöten der Messdrähte, erleichtert.

Weitere Eigenschaften und Vorteile der vorliegenden Erfindung ergeben sich aus der nachfolgenden Beschreibung unter Bezugnahme auf die Zeichnungen.
- Fig. 1: ist eine Perspektivansicht einer Ausführungsform eines erfindungsgemäßen potentiometrischen Sensorelements;
- Fig. 2: ist ein Querschnitt durch das Sensorelement aus Fig. 1 mit aufgesetzter Schutzkappe;
- Fig. 3: zeigt in Querschnittsansicht einen ersten Zwischenzustand bei der Herstellung eines erfindungsgemäßen Sensorelements;
- Fig. 4: zeigt in Querschnittsansicht einen zweiten Zwischenzustand bei der Herstellung eines erfindungsgemäßen Sensorelements;
- Fig. 5: zeigt in Querschnittsansicht einen dritten Zwischenzustand bei der Herstellung eines erfindungsgemäßen Sensorelements;
- Fig. 6: zeigt in Querschnittsansicht einen vierten Zwischenzustand bei der Herstellung eines erfindungsgemäßen Sensorelements; und
- Fig. 7: zeigt in Querschnittsansicht den Endzustand bei der Herstellung eines erfindungsgemäßen Sensorelements.

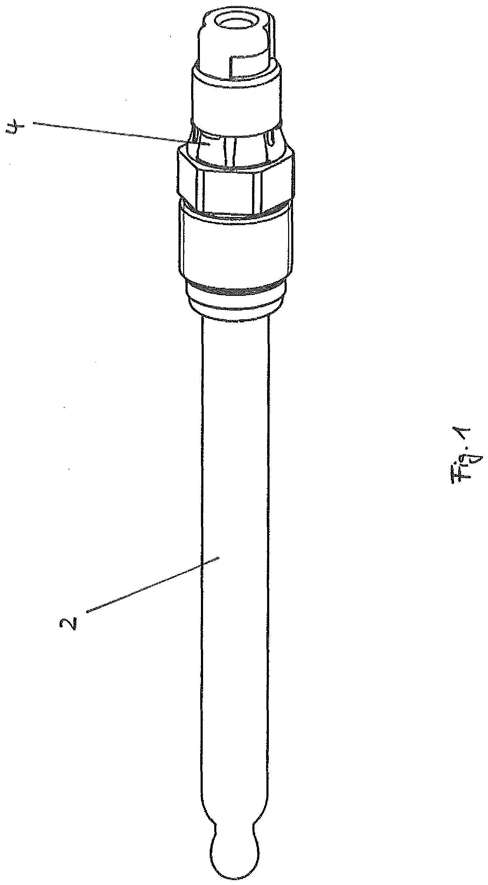

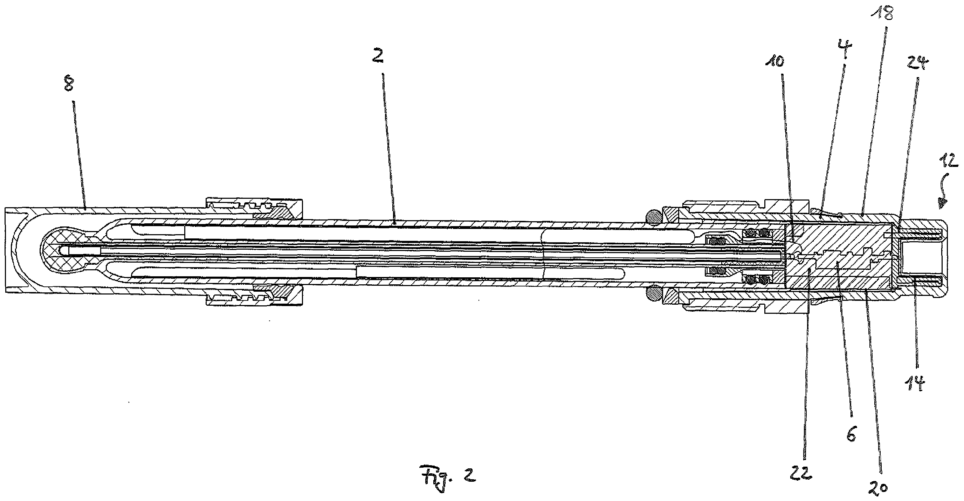

Das in Fig. 1 und 2 dargestellte potentiometrische Sensorelement ist im dargestellten Beispielsfall zur pH-Messung geeignet, kann aber auch für eine anderweitige potentiometrische Analyse ausgestaltet sein.

Das potentiometrische Sensorelement umfasst ein Messelement 2 und ein damit fest verbundenes Schutzgehäuse 4 für eine Sensorelektronikeinheit 6. Üblicherweise ist das Messelement 2 als ein Messstab ausgebildet, im konkreten Beispielsfall als herkömmliche Glaselektrode. In Fig. 2 ist das Messelement 2 in seinem vorderen Endbereich mit einer Schutzkappe 8 abgedeckt.

Das Schutzgehäuse 4 für die Sensorelektronikeinheit 6 dient gleichzeitig als mechanischer Verbinder, der mit einem entsprechenden Basiselement (nicht dargestellt), in dem eine Basiselektronikeinheit ausgebildet ist, lösbar verbunden wird. Die Verbindung kann beispielsweise mittels eines Bajonettverschlusses erfolgen.

Die Sensorelektronikeinheit 6 ist vorzugsweise als Platine mit darauf angebrachten Elektronikbauteilen ausgebildet. Die Sensorelektronikeinheit 6 ist mittels Drähten 10 mit dem Messelement 2 verbunden. Andererseits ist die Sensorelektronikeinheit 6 auch mit einer kontaktlosen Schnittstelle 12 verbunden, die zum Energie- und Signalaustausch mit einer entsprechenden kontaktlosen Schnittstelle (nicht dargestellt) an der Basiselektronikeinheit (nicht dargestellt) dient. In der dargestellten Ausführungsform ist die kontaktlose Schnittstelle 12 eine induktive Schnittstelle, die eine Spule 14 aufweist. In bestimmten Ausführungsformen kann die Spule 14 einen Ferritkern aufweisen.

Durch Zusammenwirken mit einer zweiten Spule (nicht dargestellt), die bei der Basiselektronikeinheit angeordnet ist, bewirkt die Spule 14 sowohl die Übertragung des Energieversorgungssignals von der Basiselektronikeinheit an die Sensorelektronikeinheit 6 als auch die Übertragung des Messsignals von der Sensorelektronikeinheit 6 an die Basiselektronikeinheit. Details zur Ausgestaltung der Sensorelektronikeinheit 6, der Basiselektronikeinheit und den entsprechenden Übertragungsmechanismen liefert die EP 1 206 012 A2 in den Absätzen [0041] bis [0044]. Außerdem kann die Sensorelektronikeinheit 6 einen Mikroprozessor aufweisen, der mit der kontaktlosen Schnittstelle 12 verbunden ist, und die Sensorelektronikeinheit 6 kann auch einen digitalen Speicher aufweisen.

Das Schutzgehäuse 4 für die Sensorelektronikeinheit 6 weist eine äußere Hülle 18 auf, in der eine innere Hülle 20 aufgenommen ist. Die äußere Hülle 18 ist dabei vorzugsweise U-förmig ausgestaltet und weist eine größere Länge auf als die innere Hülle 20, die vorzugsweise zylinderförmig ausgestaltet ist. Die Sensorelektronikeinheit 6 ist in der inneren Hülle 20 aufgenommen bzw. radial von dieser umgeben. Die äußere Hülle 18 ist vorzugsweise aus Kunststoff gebildet, während die innere Hülle 20 vorzugsweise aus einem Metall gebildet ist, besonders bevorzugt aus Messing.

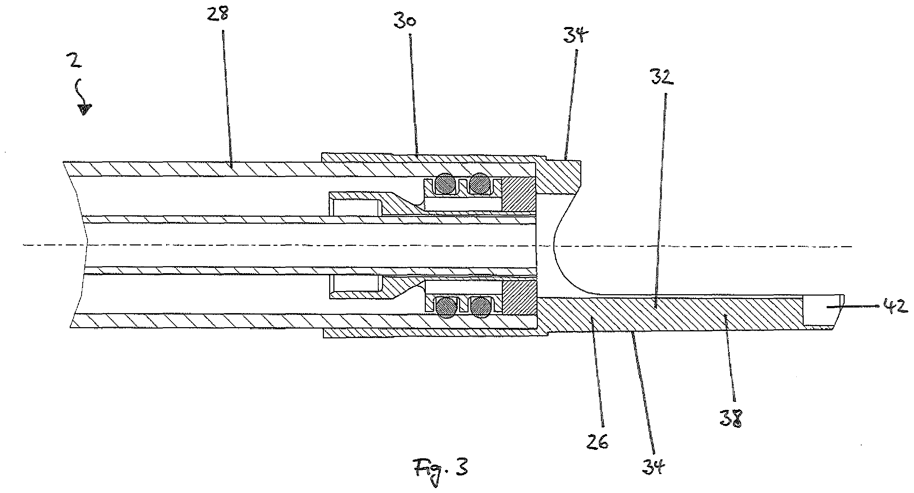

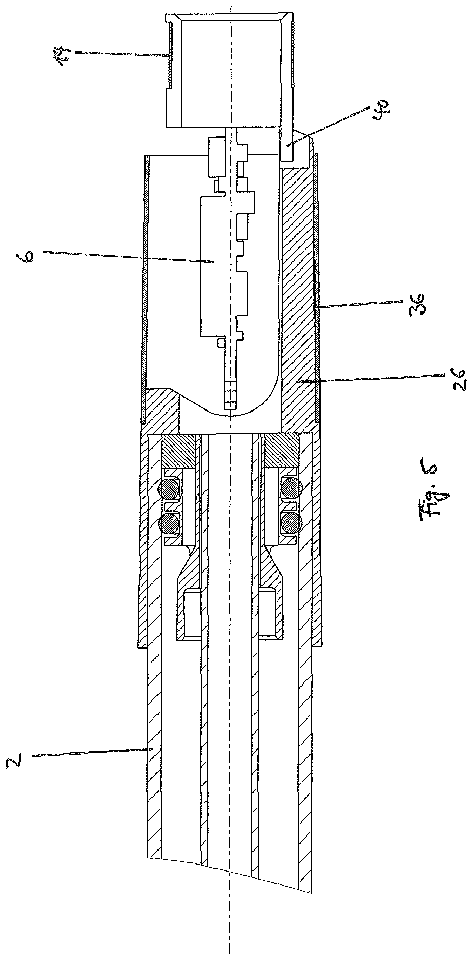

Die innere Hülle 20 ist außerdem vorzugsweise zweiteilig ausgestaltet, wie weiter unten unter Bezugnahme auf Fig. 3 und 5 näher beschrieben wird.

Die Sensorelektronikeinheit 6 ist in der inneren Hülle 20 von einer ersten Vergussmasse 22 umgeben, so dass die innere Hülle 20 mit der darin aufgenommenen Sensorelektronikeinheit 6 und der ersten Vergussmasse 22 ein gefülltes Innenelement des Schutzgehäuses 4 bildet. Dieses gefüllte Innenelement ist mittels einer zweiten Vergussmasse 24, die zur ersten Vergussmasse 22 verschieden ist, fest mit der äußeren Hülle 18 des Schutzgehäuses 4 verbunden.

Die erste Vergussmasse 22 ist dabei aus einer Gruppe von Vergussmassen ausgewählt, die eine gute Wärmeleitung und elektrische Isolierung liefern, während die zweite Vergussmasse 24 aus einer Gruppe von Vergussmassen ausgewählt ist, die eine thermisch stabile Klebeverbindung liefern.

Ein Beispiel für die erste Vergussmasse 22 ist der Zwei-Komponenten-Kleber, der unter der Bezeichnung "Araldite" auf dem Markt erhältlich ist und aus dem Harz AY 103-1 und dem Härter HY 956 zusammengesetzt ist. Selbstverständlich existiert eine Vielzahl anderer Möglichkeiten an geeigneten Klebern, die dem Fachmann als Alternativen geläufig sind.

Die zweite Vergussmasse 24 ist beispielsweise der Zwei-Komponenten-Kleber, der auf dem Markt unter der Bezeichnung "Araldite rapid" erhältlich ist und das Harz AW 2104 und den Härter HW 2934 aufweist. Auch hier existieren viele Möglichkeiten der Kleberauswahl.

Ein besonders vorteilhafter Effekt der vorliegenden Erfindung liegt darin, dass die beiden Vergussmassen 22, 24 unabhängig voneinander und mit unterschiedlichen Eigenschaften gewählt werden können. Somit gelingt es durch geeignete Auswahl der ersten Vergussmasse 22, eine optimale Wärmeableitung und elektrische Isolierung der Sensorelektronikeinheit 6 zu gewährleisten, während die thermisch möglichst stabile Klebeverbindung zur äußeren Hülle 18 des Schutzgehäuses 4 der zweiten Vergussmasse 24 obliegt. Die Zusammensetzung der zweiten Vergussmasse 24 ist so zu wählen, dass unterschiedliche Wärmeausdehnungskoeffizienten der inneren Hülle 20 und äußeren Hülle 18 bzw. der getrockneten ersten Vergussmasse 22 und der äußeren Hülle 18 ausgeglichen werden können.

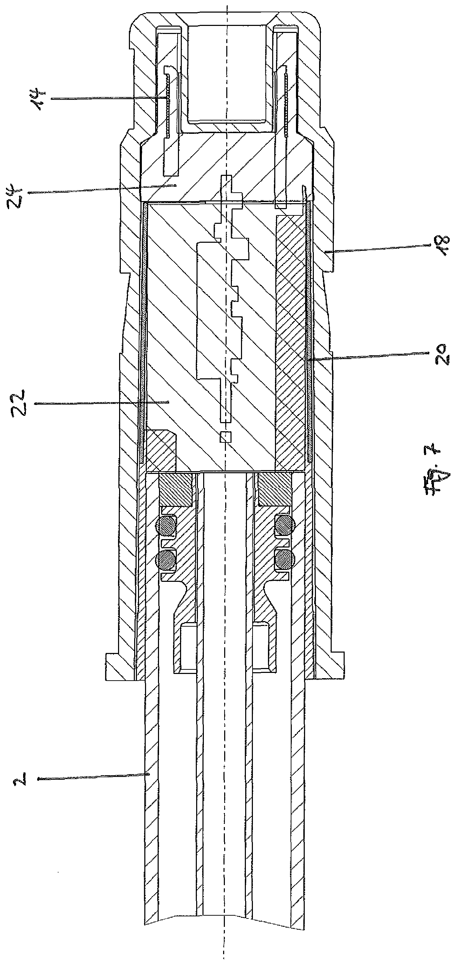

Wie aus Fig. 2 hervorgeht, ragt die Spule 14 axial aus der inneren Hülle 20 hervor und ist dort von der zweiten Vergussmasse 24 umgeben. Die zweite Vergussmasse 24 ist außerdem an der Kontaktstelle fest mit der ersten Vergussmasse 22 verbunden. Wie aus Fig. 7 ersichtlich ist, ist es bevorzugt, dass die zweite Vergussmasse 24 auch noch in einen kleinen Spalt zwischen innerer Hülle 20 und äußerer Hülle 18 vorhanden ist, um die Befestigung der inneren Hülle 20 an der äußeren Hülle 18 besonders fest und sicher zu gestalten. Außerdem hat dieser Spalt zwischen innerer Hülle 20 und äußerer Hülle 18 Vorteile dahingehend, dass beim Aushärten der zweiten Vergussmasse 24 die Luft in diesen Spalt nach oben entweichen kann, wie später bei der Beschreibung des Herstellungsverfahrens noch näher beschrieben wird.

Der dargestellte Aufbau ist auch geeignet, die ATEX-Produktrichtlinien zu erfüllen. Demnach darf von dem Sensorelement keine Explosionsgefahr ausgehen, wenn entzündliches Messgut, wie etwa diverse Lösungsmittel, Wasserstoff etc. vermessen wird. Ein Risiko könnte nämlich dann vorliegen, wenn sich der Sensor zu stark aufheizt, z.B. indem Wärme nicht ausreichend von der Platine abgeleitet werden kann, oder wenn Funkenschlag durch elektrostatische Aufladung am Sensorkopf entsteht. Die gesamte Anordnung des Schutzgehäuses 4 ist auch tauchfest. Schließlich sind die Luft- und Kriechstrecken im Bereich der Sensorelektronikeinheit 6 eindeutig festgelegt.

Unter Bezugnahme auf Fig. 3 bis 7 soll nun ein Bespiel des erfindungsgemäßen Herstellungsverfahrens des potentiometrischen Sensorelements beschrieben werden.

Zunächst wird, wie in Fig. 3 dargestellt ist, das Messelement 2 bereitgestellt und fest mit einem Montageteil 26 der inneren Hülle 20 des Schutzgehäuses 4 verbunden. Konkreter gesagt wird das Montageteil 26 an seinem hülsenförmigen Abschnitt 30, der vorzugsweise zylindrisch ist, innen mit einem geeigneten Kleber bestrichen und außen über das Gehäuse 28 des Messelements 2 geschoben, im dargestellten Beispielsfall also über das Glasrohr. Anschließend lässt man den Kleber aushärten.

Das Montageteil 26 umfasst neben dem hülsenförmigen Abschnitt 30, der über das Messelement 2 geschoben wird, noch einen steckerförmigen Abschnitt 32, der im eingebauten Zustand vom Messelement 2 axial abragt. Der steckerförmige Abschnitt 32 erstreckt sich über eine gewisse Länge um den gesamten Umfang des Montageteils 26 und bildet dort eine Aufnahmefläche 34 für das in Fig. 5 zu erkennende hohlkörperförmige Aufsetzteil 36 der inneren Hülle 20. Ein langer Schenkel 38 des Montageteils 26 ragt in einem radial begrenzten Umfangsteilabschnitt axial noch weiter vom hülsenförmigen Abschnitt 30 ab.

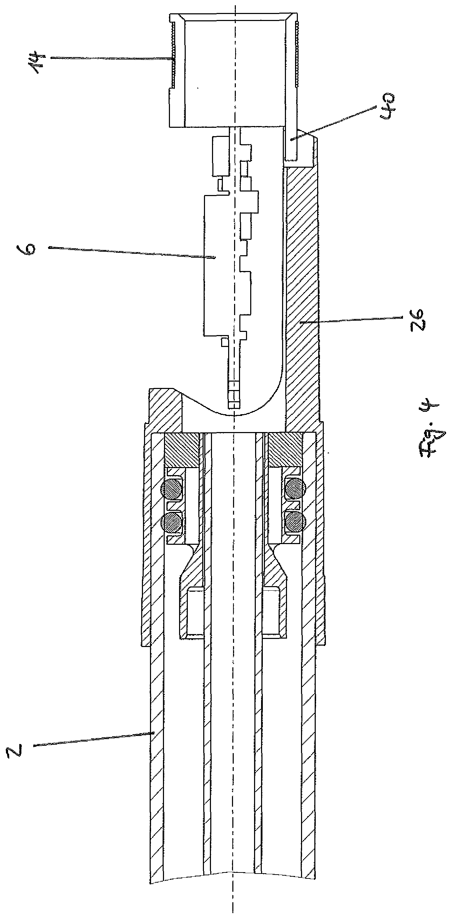

Wie aus Fig. 4 ersichtlich ist, ist die Sensorelektronikeinheit 6 mit einem ersten Verbindungselement 40, im dargestellten Beispielsfall einem rechteckigen Vorsprung, verbunden, das mit einem an dem Montageteil 26 der inneren Hülle 20 ausgebildeten zweiten Verbindungselement 42 (Fig. 3), hier einer Ausnehmung im Schenkel 38, in Eingriff steht. Im dargestellten Beispielsfall ist das erste Verbindungselement 40 an der Spule 14 angebracht und ragt von dieser in Richtung des Montageteils 26 vor. Durch Einklipsen des ersten Verbindungselements 40 in das zweite Verbindungselement 42 gelingt ein mechanisches Ankoppeln der Sensorelektronikeinheit 6 an das Montageteil 26. In dieser Position, die in Fig. 4 dargestellt ist, können nun Sensorkontakte des Messelements 2 an die Sensorelektronikeinheit 6 angelötet werden. Dies sind insbesondere die in Fig. 2 dargestellten Drähte 10, die allerdings in Fig. 4 bis 7 aus Übersichtlichkeitsgründen nicht mehr dargestellt sind. Alternativ können die Drähte 10 auch vor dem mechanischen Ankoppeln der Sensorelektronikeinheit 6 an das Montageteil 26 angelötet werden. Das erstere Vorgehen liefert jedoch den Vorteil einer definierten Lagerung der Sensorelektronikeinheit 6 während des Lötvorgangs, wobei die Form des Montageteils 26 eine freie Zugänglichkeit auf die Sensorelektronikeinheit 6 ermöglicht.

Nunmehr wird, wie in Fig. 5 dargestellt, der zweite Teil der inneren Hülle 20, nämlich das Aufsetzteil 36, auf das Montageteil 26 aufgesetzt und somit um die Sensorelektronikeinheit 6 herum angeordnet. Das Aufsetzteil 36 ist hohlkörperförmig gestaltet, besonders bevorzugt in Form einer zylindrischen Hülse. Die Aufnahmeflächen 34 am Montageteil 26 dienen der Auflage und Führung des Aufsetzteils 36.

Es existieren neben der dargestellten Methode aber auch noch viele andere Methoden, die innere Hülle 20 des Schutzgehäuses 4 um die Sensorelektronikeinheit 6 herum anzuordnen und fest mit dem Messelement 2 zu verbinden, in dieser oder in der umgekehrten Reihenfolge.

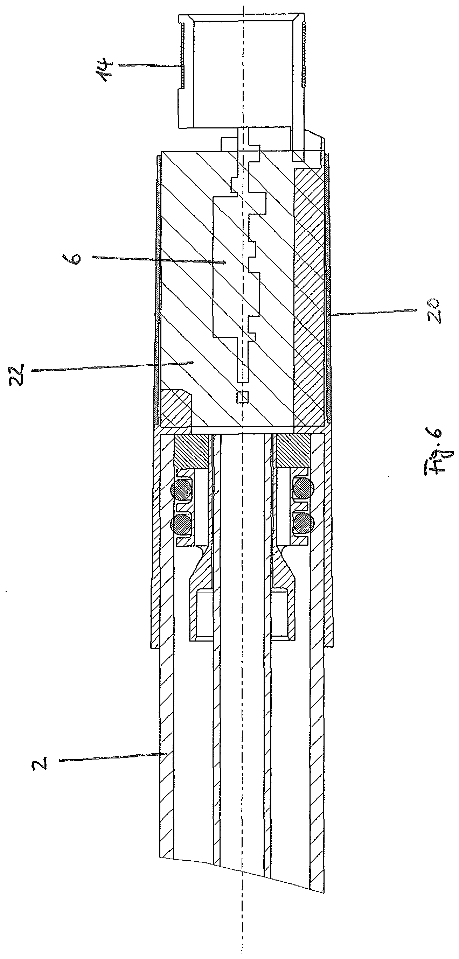

Nunmehr wird das Messelement 2 mit der daran befestigten inneren Hülle 20 vertikal ausgerichtet und die innere Hülle 20 mit der ersten Vergussmasse 22 gefüllt. Aufgrund der vertikalen Anordnung kann die erste Vergussmasse 22 bis zum oberen Rand der inneren Hülle 20 aufgefüllt werden, und gleichzeitig ist sichergestellt, dass Luft nach oben ausgasen kann, so dass die Sensorelektronikeinheit 6 nach dem Aushärten der ersten Vergussmasse 22 komplett und ohne Lufteinschlüsse von der ersten Vergussmasse 22 umgeben ist. Dieses somit aus innerer Hülle 20, erster Vergussmasse 22 und Sensorelektronikeinheit 6 gebildete gefüllte Innenelement ist in Fig. 6 dargestellt.

Schließlich wird die äußere Hülle 18, die im Wesentlichen U-förmig ausgebildet ist, mit der Öffnung nach oben in einer vertikalen Position gehalten und mit der zweiten Vergussmasse 24 teilweise gefüllt. Anschließend wird das gefüllte Innenelement mit der Spule 14 voraus von oben eingeführt. Bevorzugt ist es, wenn zwischen dem gefüllten Innenelement bzw. dem Messelement 2 und der äußeren Hülle 18 noch ein Luftspalt verbleibt, durch den die Luft beim Aushärten der zweiten Vergussmasse 24 entweichen kann. Außerdem wird dieser Luftspalt durch die aufsteigende zweite Vergussmasse 24 gefüllt. Hierbei ist wichtig, dass eine korrekte Menge der zweiten Vergussmasse 24 verwendet wird. Einerseits muss die Menge hoch genug sein, so dass eine sichere Verbindung zwischen dem gefüllten Innenelement und der äußeren Hülle 18 bzw. zwischen Spule 14 und äußerer Hülle 18 gewährleistet ist. Umgekehrt soll ein Überquellen aufgrund einer zu hohen Menge der zweiten Vergussmasse 24 unbedingt vermieden werden. Nach dem Aushärten der zweiten Vergussmasse 24 ist das gefüllte Innenelement fest mit der äußeren Hülle 18 des Schutzgehäuses 4 verbunden.

## Patentansprüche

1. Potentiometrisches Sensorelement mit
einem Messelement (2) und
einem mit dem Messelement (2) fest verbundenen Schutzgehäuse (4), in dem eine Sensorelektronikeinheit (6) aufgenommen und gegen äußere Einflüsse abgedichtet ist,
wobei die Sensorelektronikeinheit (6) mit einer kontaktlosen Schnittstelle (12) verbunden ist, die zum Energie- und Signalaustausch mit einer entsprechenden kontaktlosen Schnittstelle an einer Basiselektronikeinheit dient,
**dadurch gekennzeichnet, dass**
das Schutzgehäuse (4) eine äußere Hülle (18) und eine in der äußeren Hülle (18) aufgenommene innere Hülle (20) aufweist, wobei die Sensorelektronikeinheit (6) in der inneren Hülle (20) aufgenommen ist,
die Sensorelektronikeinheit (6) in der inneren Hülle (20) von einer ersten Vergussmasse (22) umgeben ist und somit die innere Hülle (20) mit der darin aufgenommenen Sensorelektronikeinheit (6) und der ersten Vergussmasse (22) ein gefülltes Innenelement des Schutzgehäuses (4) bildet, und
das gefüllte Innenelement mittels einer zweiten Vergussmasse (24), die zur ersten Vergussmasse (22) verschieden ist, fest mit der äußeren Hülle (18) verbunden ist.

2. Potentiometrisches Sensorelement nach Anspruch 1, **dadurch gekennzeichnet, dass**
die Sensorelektronikeinheit (6) als Platine mit darauf angebrachten Elektronikbauteilen ausgebildet ist.

3. Potentiometrisches Sensorelement nach Anspruch 1 oder 2, **dadurch gekennzeichnet, dass** die innere Hülle (20) des Schutzgehäuses (4) aus einem Metall, vorzugsweise aus Messing, besteht.

4. Potentiometrisches Sensorelement nach einem der vorangehenden Ansprüche, **dadurch gekennzeichnet, dass** die innere Hülle (20) zweiteilig ausgebildet ist, wobei die innere Hülle (20) ein Montageteil (26) und ein auf das Montageteil (26) aufsetzbares hohlkörperförmiges Aufsetzteil (36) aufweist.

5. Potentiometrisches Sensorelement nach Anspruch 4, **dadurch gekennzeichnet, dass**
die Sensorelektronikeinheit (6) mit einem ersten Verbindungselement (40) verbunden ist, das mit einem an dem Montageteil (26) der inneren Hülle (20) ausgebildeten zweiten Verbindungselement (42) in Eingriff steht.

6. Potentiometrisches Sensorelement nach Anspruch 5, **dadurch gekennzeichnet, dass** das erste Verbindungselement (40) ein Vorsprung und das zweite Verbindungselement (42) eine Ausnehmung ist.

7. Potentiometrisches Sensorelement nach einem der vorangehenden Ansprüche, **dadurch gekennzeichnet, dass** die kontaktlose Schnittstelle (12) eine induktive Schnittstelle ist, die eine Spule (14) aufweist.

8. Potentiometrisches Sensorelement nach Anspruch 7, **dadurch gekennzeichnet, dass**
die Spule (14) außerhalb der inneren Hülle (20) angeordnet ist und von der zweiten Vergussmasse (24) umgeben ist.

9. Potentiometrisches Sensorelement nach einem der vorangehenden Ansprüche, **dadurch gekennzeichnet, dass** die erste Vergussmasse (22) aus einer Gruppe von Vergussmassen ausgewählt ist, die eine gute Wärmeleitung und elektrische Isolierung liefern, während die zweite Vergussmasse (24) aus einer Gruppe von Vergussmassen ausgewählt ist, die eine thermisch stabile Klebeverbindung liefern.

10. Verfahren zum Herstellen eines potentiometrischen Sensorelements mit einem Messelement (2) und einem fest damit verbundenen Schutzgehäuse (4), in dem eine Sensorelektronikeinheit (6) aufgenommen und gegen äußere Einflüsse abgedichtet ist, mit folgenden Schritten:
Bereitstellen des Messelements (2);
Anordnen einer inneren Hülle (20) des Schutzgehäuses (4) um die Sensorelektronikeinheit (6) herum und festes Verbinden der inneren Hülle (20) mit dem Messelement (2);
Auffüllen der inneren Hülle (20) mit einer ersten Vergussmasse (22) und Aushärten der ersten Vergussmasse (22), dadurch Ausbilden eines gefüllten Innenelements bestehend aus der inneren Hülle (20) mit der darin aufgenommenen Sensorelektronikeinheit (6) und der ersten Vergussmasse (22), die die Sensorelektronikeinheit (6) umgibt;
Einfüllen einer zweiten Vergussmasse (24), die zur ersten Vergussmasse (22) verschieden ist, in eine einseitig offene äußere Hülle (18) des Schutzgehäuses (4), Einführen des gefüllten Innenelements in die äußere Hülle (18) und Aushärten der zweiten Vergussmasse (24), dadurch festes Verbinden des gefüllten Innenelements mit der äußeren Hülle (18) des Schutzgehäuses (4).

11. Verfahren nach Anspruch 10, **dadurch gekennzeichnet, dass** das Anordnen der inneren Hülle (20) um die Sensorelektronikeinheit (6) herum und das feste Verbinden der inneren Hülle (20) mit dem Messelement (2) folgende Schritte umfasst:
festes Verbinden eines Montageteils (26) der inneren Hülle (20) mit dem Messelement (2);
mechanisches Ankoppeln der Sensorelektronikeinheit (6) an das Montageteil (26);
Anlöten von Sensorkontakten des Messelements (2) an die Sensorelektronikeinheit (6); und
Aufsetzen eines hohlkörperförmigen Aufsetzteils (36) der inneren Hülle (20) auf das Montageteil (26) und somit Anordnen des Aufsetzteils (36) um die Sensorelektronikeinheit (6) herum.

## Claims

1. Potentiometric sensor element with a measuring element (2) and a protective casing (4) fixedly connected to the measuring element (2) in which a sensor electronic head (6) is housed and protected against external influences, wherein the sensor electronic unit (6) is connected to a contactless interface (12) which serves to exchange energy and signals with a corresponding contactless interface on a base electronic unit, **characterised in that** the protective casing (4) comprises an outer sleeve (18) and an inner sleeve (20) received in the outer sleeve (18) wherein the sensor electronic unit (6) is received in the inner sleeve (20),
the sensor electronic unit (5) is surrounded in the inner sleeve (20) by a first casting compound (22), and thus the inner sleeve (20) with the sensor electronic unit (6) received therein, and the first casting compound (22) thereby form one filled internal element of the protective casing (4), and
the filled internal element is connected fixedly to the outer sleeve (18) by means of a second casting compound (24) which is different from the first casting compound (22).

2. Potentiometric sensor element according to claim 1, **characterised in that** the sensor electronic unit (6) is configured as a circuit board with electronic components attached thereon.

3. Potentiometric sensor element according to claim 1 or 2 **characterised in that** the inner sleeve (20) of the protective casing (4) is made from a metal, preferably brass.

4. Potentiometric sensor element according to one of the preceding claims **characterised in that** the inner sleeve (20) is formed in two parts wherein the inner sleeve (20) comprises an assembly part (26) and a hollow-body shaped fitment (36) which can be fitted on the assembly part (26).

5. Potentiometric sensor element according to claim 4 **characterised in that** the sensor electronic unit (6) is connected to a first connecting element (40) which engages with a second connecting element (42) which is formed on the assembly part (26) of the inner sleeve (20).

6. Potentiometric sensor element according to claim 5 **characterised in that** the first connecting element (40) is a projection, and the second connecting element (42) is a recess.

7. Potentiometric sensor element according to one of the preceding claims, **characterised in that** the contactless interface (12) is an inductive interface which comprises a coil (14).

8. Potentiometric sensor element according to claim 7 **characterised in that** the coil (14) is disposed outside of the inner sleeve (20) and is surrounded by the second casting compound (24).

9. Potentiometric sensor element according to one of the preceding claims **characterised in that** the first casting compound (22) is selected from a group of casting compounds which offer good heat conduction and electric insulation whilst the second casting compound (24) is selected from a group of casting compounds which provide a thermally stable adhesive connection.

10. Method for producing a potentiometric sensor element having a measuring element (2) and a protective casing (4) fixedly connected thereto in which a sensor electronic unit (6) is housed and sealed against external influences, with the following steps:
providing the measuring element t (2);
arranging an inner sleeve (20) of the protective casing (4) around the sensor electronic unit (6) and fixedly connecting the inner sleeve (20) to the measuring element (2);
filling the inner sleeve (20) with a first casting compound (22) and hardening the first casting compound, thereby forming a filled internal element consisting of the inner sleeve (20) with the sensor electronic unit (6) received therein, and the first casting compound (22) which surrounds the sensor electronic unit (6);
filling a second casting compound (24) which is different from the first casting compound (22) into an outer cover (18) open on one side of the protective housing (4), introducing the filled internal element into the outer sleeve (18) and hardening the second casting compound (24), thereby fixedly connecting the filled internal element to the outer sleeve (18) of the protective casing (4).

11. Method according to claim 10 **characterised in that** arranging the inner sleeve (20) around the sensor electronic unit (6) and fixedly connecting the inner sleeve (20) to the measuring element (2) comprises the following steps:
fixedly connecting an assembly part (26) of the inner sleeve (20) to the measuring element (2);
mechanically coupling the sensor electronic unit (6) to the assembly part (26);
soldering the sensor contacts of the measuring element (2) onto the sensor electronic unit (6); and
placing a hollow body shaped fitment part (36) of the inner sleeve (20) onto the assembly part (26) and thus arranging the fitment part (36) around the sensor electronic unit (6).

## Revendications

1. Elément capteur potentiométrique comprenant
un élément de mesure (2) et
un boîtier protecteur (4) qui est relié solidement à l'élément de mesure (2) et dans lequel une unité électronique de capteur (6) est logée et étanchéifiée vis-à-vis des influences extérieures,
l'unité électronique de capteur (6) étant reliée à une interface sans contact (12), qui sert à échanger de l'énergie et des signaux avec une interface sans contact correspondante sur une unité électronique de base,
**caractérisé en ce que**
le boîtier protecteur (4) comprend une enveloppe extérieure (18) et une enveloppe intérieure (20) logée dans l'enveloppe extérieure (18), l'unité électronique de capteur (6) étant logée dans l'enveloppe intérieure (20),
l'unité électronique de capteur (6) dans l'enveloppe intérieure (20) est entourée par un premier matériau d'enrobage (22) et donc l'enveloppe intérieure (20) dans laquelle sont logés l'unité électronique de capteur (6) et le premier matériau d'enrobage (22) forment un élément intérieur rempli du boîtier protecteur (4), et
l'élément intérieur rempli est relié solidement à l'enveloppe extérieure (18) au moyen d'un deuxième matériau d'enrobage (24), qui est différent du premier matériau d'enrobage (22).

2. Elément capteur potentiométrique selon la revendication 1, **caractérisé en ce que** l'unité électronique de capteur (6) est réalisée sous la forme d'une platine sur laquelle sont montés des composants électroniques.

3. Elément capteur potentiométrique selon la revendication 1 ou 2, **caractérisé en ce que** l'enveloppe intérieure (20) du boîtier protecteur (4) est constituée d'un métal, de préférence de laiton.

4. Elément capteur potentiométrique selon l'une quelconque des revendications précédentes, **caractérisé en ce que** l'enveloppe intérieure (20) est réalisée en deux parties, l'enveloppe intérieure (20) comprenant une partie de montage (26) et une partie à mettre en place (36) en forme de corps creux pouvant être mise en place sur la partie de montage (26).

5. Elément capteur potentiométrique selon la revendication 4, **caractérisé en ce que** l'unité électronique de capteur (6) est reliée à un premier élément de liaison (40) qui est en contact avec un deuxième élément de liaison (42) formé sur la partie de montage (26) de l'enveloppe intérieure (20).

6. Elément capteur potentiométrique selon la revendication 5, **caractérisé en ce que** le premier élément de liaison (40) est une partie saillante et le deuxième élément de liaison (42) est un évidement.

7. Elément capteur potentiométrique selon l'une quelconque des revendications précédentes, **caractérisé en ce que** l'interface sans contact (12) est une interface inductive qui comprend une bobine (14).

8. Elément capteur potentiométrique selon la revendication 7, **caractérisé en ce que** la bobine (14) est agencée à l'extérieur de l'enveloppe intérieure (20) et est entourée par le deuxième matériau d'enrobage (24).

9. Elément capteur potentiométrique selon l'une quelconque des revendications précédentes, **caractérisé en ce que** le premier matériau d'enrobage (22) est choisi dans un groupe de matériaux d'enrobage qui fournissent une conductivité thermique et une isolation électrique satisfaisantes, tandis que le deuxième matériau d'enrobage (24) est choisi dans un groupe de matériaux d'enrobage qui fournissent une liaison adhésive thermiquement stable.

10. Procédé de fabrication d'un élément capteur potentiométrique comprenant un élément de mesure (2) et un boîtier protecteur (4) relié fixement à celui-ci, dans lequel une unité électronique de capteur (6) est logée et étanchéifiée vis-à-vis des influences extérieures, le procédé comprenant les étapes suivantes :
la fourniture de l'élément de mesure (2) ;
l'agencement d'une enveloppe intérieure (20) du boîtier protecteur (4) autour de l'unité électronique de capteur (6) et la liaison solide de l'enveloppe intérieure (20) à l'élément de mesure (2) ;
le remplissage de l'enveloppe intérieure (20) d'un premier matériau d'enrobage (22) et le durcissement du premier matériau d'enrobage (22), et ainsi la formation d'un élément intérieur rempli constitué de l'enveloppe intérieure (20) dans laquelle sont logés l'unité électronique de capteur (6) et le premier matériau d'enrobage (22), qui entoure l'unité électronique de capteur (6) ;
le versement d'un deuxième matériau d'enrobage (24), qui est différent du premier matériau d'enrobage (22), dans une enveloppe extérieure (18) ouverte sur un côté du boîtier protecteur (4), l'introduction de l'élément intérieur rempli dans l'enveloppe extérieure (18) et le durcissement du deuxième matériau d'enrobage (24), et ainsi la liaison solide de l'élément intérieur rempli à l'enveloppe extérieure (18) du boîtier protecteur (4).

11. Procédé selon la revendication 10, **caractérisé en ce que** l'agencement de l'enveloppe intérieure (20) autour de l'unité électronique de capteur (6) et la liaison solide de l'enveloppe intérieure (20) à l'élément de mesure (2) comprend les étapes suivantes :
la liaison solide d'une partie de montage (26) de l'enveloppe intérieure (20) à l'élément de mesure (2) ;
l'accouplement mécanique de l'unité électronique de capteur (6) à la partie de montage (26) ;
le soudage des contacts de capteur de l'élément de mesure (2) à l'unité électronique de capteur (6) ; et
la mise en place d'une partie à mettre en place (36) en forme de corps creux de l'enveloppe intérieure (20) sur la partie de montage (26) et donc l'agencement de la partie à mettre en place (36) autour de l'unité électronique de capteur (6).
